# EUROPEAN PATENT APPLICATION

(11) **EP 1 006 023 A2**
(43) Date of publication of application: **07.06.2000**
(21) Application number: 99830357.2
(22) Date of filing: 09.06.1999
(51) Int. Cl.: B60R 13/08, F01N 7/14

(54) **Heat shield for motor-vehicles**

(30) Priority: 30.11.1998 IT TO980210 U
(71) Applicant: AAW Italia S.p.a., 10034 Chivasso (Torino) (IT)
(72) Inventor: Romano, Franco, 10034 Chivasso (Torino) (IT)
(74) Representative: Buzzi, Franco

(57) **Abstract**

A heat shield for motor-vehicles, comprising two foils (2, 3) made of aluminium or alloys thereof, between which a thermally insulating layer (4) is arranged, consisting of a high-temperature-resistant resilient adhesive having damping and soundproofing capacity. The adhesive (4) is normally a silicone adhesive and may incorporate hollow ceramic micro-spheres (5).

## Description

The present invention is related to heat shields or thermal barriers intended particularly to be interposed between the body and the exhaust system of a motor-vehicle engine, for instance in the area of the engine compartment or of the exhaust manifold/catalytic unit.

Traditionally these heat shields comprise two metallic structural foils, normally made of aluminium or alloys thereof, between which a thermally insulating material is interposed.

In the present known solutions, the thermally insulating material of the heat shield consists of ceramic or glass fibres, or carbon fibres. Arrangements have also been proposed in which thermal insulation is simply provided by an air chamber comprised between the two metal foils, which can also be maintained spaced apart from each other by an inner corrugated or zig-zag sheet.

According to a further known solution the thermally insulating material comprised between the two aluminium foils comprises a non-woven layer made of artificial or synthetic fibres, preferably of modified acrylic fibres.

The object of the present invention is to provide a heat shield of the above-referenced type provided, as compared with the previously disclosed known thermal barriers, with enhanced characteristics of not only thermal by even acoustical and vibrational insulation, afforded by low production costs.

This object is achieved by virtue of the fact that in the heat shield according to the invention said thermally insulating layer is constituted by a high-temperature-resistant resilient adhesive having damping and soundproofing capacities.

Due to this idea of solution the two foils of aluminium or alloys thereof are thus mutually connected to each other not rigidly but elastically, which enables the heat shield of the invention to provide surprisingly improved performances in terms of thermal, acoustical and vibrational insulation.

Preferably the adhesive is of a silicone type, and additionally it may conveniently incorporate ceramic micro-spheres, preferably having a hollow construction, which awards further improved high-temperature resistance performance to the adhesive layer.

Preferably, even if not strictly necessarily, the two aluminium foils may have different thickness.

The invention will now be disclosed in detail with reference to the accompanying drawings, purely provided by way of non limiting example, in which:
- Figure 1 is a diagrammatic perspective view of a heat shield for motor-vehicles according to the invention,
- figure 2 is a sectioned and enlarged view along line II-II of figure 1,
- figure 3 shows in an enlarged scale a detail of figure 2, and
- figure 4 shows a variant of figure 3.

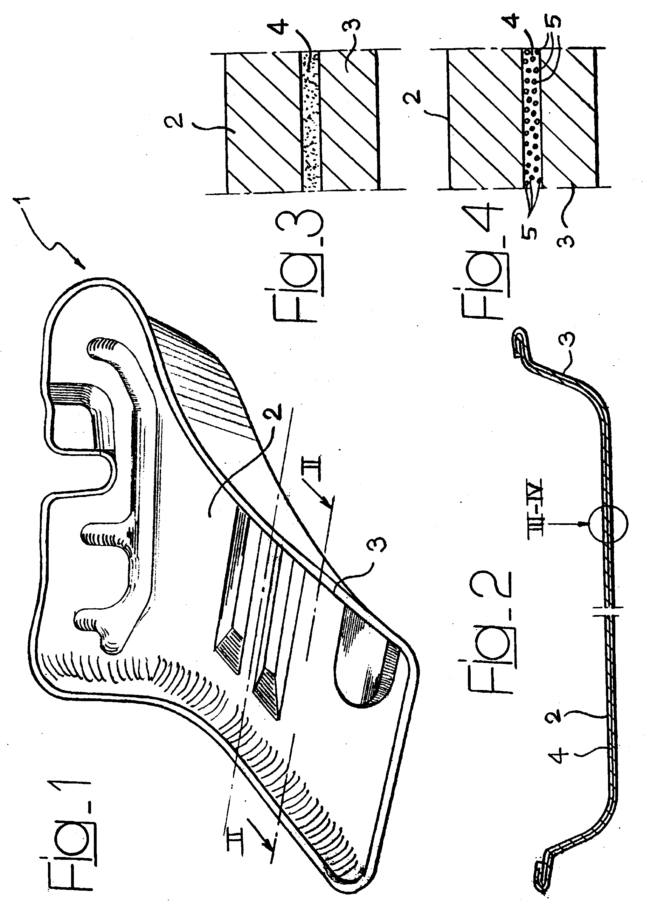

Referring to figures 1 through 3, reference numeral 1 generally designates a heat shield according to the invention, designed for application thereof - by means of any suitable fixing means - to the structure of a motor-vehicle, so as to be interposed between the body and the engine exhaust system.

The heat shield 1 is formed by two foils 2, 3 superimposed to each other and connected along the respective peripheral edges by overturning these edges.

The two foils 2, 3 are made of aluminium or alloys thereof and have preferably different thickness, for instance the former of about 0.3 mm. and the latter of about 0.4 mm., or the former of 0.3 mm. and the latter of 0.2 mm. Alternatively, both foils 2, 3 may have an even thickness, for instance of about 0.3 or 0.4 mm.

According to the invention a layer of resilient adhesive 4, conveniently of a silicone type, is interposed between the two foils. This adhesive layer 4, which is joining the two metal foils 2, 3 to each other permanently though not rigidly, is capable to award the heat shield 1 enhanced performances in terms of not only thermal but even acoustical insulation, as well as a remarkable damping capacity of the vibrations to which the shield 1 may be subjected in use.

The layer of silicone adhesive 4 is already provided per se with a good high-temperature-resistance performance: to the aim of further increasing this characteristic the invention provides, according to the variant shown in figure 4, that this layer 4 embodies within its thickness a plurality of micro-spheres 5 made of a ceramic material.

These micro-spheres 5 have conveniently a hollow structure, and the amount thereof in volume within the adhesive layer 4 may be around 30%.

Naturally the details of construction and the embodiments may be widely varied with respect to what has been disclosed and illustrated, without thereby departing from the scope of the present invention, such as defined in the appended claims. Thus, for example, it should be apparent that the arrangement and the size of the heat shield 1, as well as the positioning of the related fixing parts to the vehicle structure, may be subject to different arrangements with respect to the shown example, as a function of the need of use.

## Claims

1. Heat shield for motor-vehicles, comprising two foils (2, 3) made of aluminium or alloys thereof between which a thermally insulating layer (4) is interposed, characterised in that said thermally insulating layer (4) consists of a high-temperature-resistant resilient adhesive having damping and soundproofing capacities.

2. Heat shield according to claim 1, characterised in that said adhesive is a silicone adhesive.

3. Heat shield according to claim 1 or claim 2, characterised in that said adhesive incorporates ceramic micro-spheres (5).

4. Heat shield according to claim 3, characterised in that said ceramic micro-spheres (5) have a hollow structure.

5. Heat shield according to any of the preceding claims, characterised in that said two aluminium foils (2, 3) have different thickness.

6. Heat shield according to claim 5, characterised in that said two foils (2, 3) have one a thickness of about 0.3 mm. and the other a thickness of about 0.4 mm., or one a thickness of about 0.3 mm. and the other a thickness of about 0.2 mm.

7. Heat shield according to any of claims 1 through 4, characterised in that said two aluminium foils (2, 3) have an even thickness, for instance of about 0.3 or 0.4 mm.
